Europäisches Patentamt

European Patent Office

Office européen des brevets

(19)

(11) Publication number: **0 182 514**
A1

(12) # EUROPEAN PATENT APPLICATION

(21) Application number: 85307673.5

(22) Date of filing: 24.10.85

(51) Int. Cl.⁴: **B 25 J 11/00**, B 25 J 18/06

(30) Priority: 24.10.84 GB 8426870

(43) Date of publication of application: 28.05.86
Bulletin 86/22

(84) Designated Contracting States: **AT BE CH DE FR GB IT
LI LU NL SE**

(71) Applicant: **Hutchinson, Paul, 4 Adcott Road Acklam,
Middlesbrough Cleveland TS5 7ES (GB)**

(72) Inventor: **Hutchinson, Paul, 4 Adcott Road Acklam,
Middlesbrough Cleveland TS5 7ES (GB)**

(74) Representative: **Orr, William McLean et al, Haseltine
Lake & Co Hazlitt House 28 Southampton Buildings
Chancery Lane, London WC2A 1AT (GB)**

(54) Robot arm for use with injection moulding machine.

(57) There is disclosed an injection moulding machine (10) having a main frame, a platen (11) mounted in the frame, and a power operated robot arm mechanism (12) operable automatically
in sequence with the operation of the moulding machine and arranged to remove moulded products (27) from the platen (11)
and to deposit such products at a discharge station (13):

characterised in that the robot arm mechanism (12) comprises a main arm (14) which is pivotally mounted on the frame
(22) for movement about a substantially horizontal axis (21), a
forearm (18) which is pivotally mounted on a free end (17) of the
main arm (14), a pivoting wrist (19) mounted on a free end of the
forearm (18), a pick-up head (20) carried by the wrist (19), and
means (35, 36) controlling the angular position of the forearm
(18) relative to the main arm (14) whereby, upon operation of the
robot arm mechanism (12), the latter is movable through a cycle
of operations which includes generally horizontal movement of
the pick-up head (20) to enter into and to be withdrawn from the
platen (11) of the machine.

0182514

-1-

ROBOT ARM FOR USE WITH INJECTION MOULDING MACHINE

This invention relates to a robot arm mechanism for use with an injection moulding machine, the mechanism being operable in sequence with the operation of the moulding machine in order to remove moulded products from the machine and to deposit such products at a discharge station.

In the removal of moulded products from injection moulding machines, it is known to provide an overhead gantry type removal system, but this has the disadvantage of requiring the provision of substantial suitable space to accommodate this overhead system.

The invention has therefore been developed primarily with a view to provide an automated product removal system, for use with an injection moulding machine, which is as reliable as the known overhead gantry type system, but which requires less space and which can operate rapidly and efficiently.

According to the invention there is provided an injection moulding machine having a main frame, a platen mounted in the frame, and a power operated robot arm mechanism operable automatically in sequence with the operation of the moulding machine and arranged to remove moulded products from the platen and to deposit such products at a discharge station:

characterised in that the robot arm mechanism comprises a main arm which is pivotally mounted on the frame for movement about a substantially horizontal axis, a forearm which is pivotally mounted on a free end of the main arm, a pivoting wrist mounted on a free end of the forearm, a pick-up head carried by the wrist, and means controlling the angular position of the forearm relative to the main arm whereby, upon operation of the robot arm mechanism, the latter is movable through a cycle of operations which includes generally horizontal movement of the pick-up head to enter into and to be withdrawn from the platen of the machine.

Thus, the robot arm mechanism is able to enter into the platen, and to remove moulded products therefrom, in a satisfactory manner without obstruction from any of the parts of the moulding machine, and in a manner which does not require the use of any overhead space above the moulding machine. The robot arm mechanism can be mounted readily at one side of the moulding machine, closely adjacent to the platen i.e. near the rear end of the machine, and move through a cycle of operations in which the forearm can move downwardly from a rest position and then horizontally into the platen, withdraws moulded products also in a generally horizontally direction, then raises the moulded products when the latter have been removed from the moulding machine, and subsequently descends so as to deposit the moulded products at the discharge station. All of the movements of the component parts of the robot arm mechanism are carefully controlled so as not to be impeded by any parts of the moulding machine.

The robot arm mechanism provided in an injection moulding machine according to the invention may be supplied as a separate component, to be added to existing designs of injection moulding machine, without requiring any major modification of the moulding machine.

Preferably, the power operated robot arm mechanism is supplied as a unit to be applied to new or existing in situ constructions of injection moulding machine, and the unit may comprise a mounting plate on which the robot arm mechanism and related parts is mounted, such mounting plate being adapted to be mounted at a required position along one side of the moulding machine adjacent to the platen.

The power operation of the robot arm mechanism may be provided by means of a pneumatic or hydraulic ram which acts between a fixed point on the mounting plate and a connection point provided on the main arm. Preferably, the main arm comprises a rigid two part elbow, and the connection point of the ram may be at the rigid joint of the elbow.

The means for controlling the angular position of the forearm relative to the main arm preferably includes a further ram which is mounted on the main arm and is coupled with the forearm. Additionally, said means may include a compensating mechanism which acts between a fixed point on the frame and the forearm, the compensating mechanism serving to maintain the forearm in a substantially upright position as the pick-up head is lowered to the discharge position.

In order to facilitate extraction of moulded products from the fixed part of the platen, it is preferred that the forearm is coupled with the free end of the main arm via a sliding arm arrangement which extends substantially perpendicular to the main arm. The forearm is carried by the sliding arm and is movable along the axis of the sliding arm, when the pick-up head is in the platen region of the moulding machine, in order to remove moulded products from the platen.

The discharge station may comprise a fixed product table arranged alongside the moulding machine, or it may be formed by an endless conveyor which serves to transport the moulded products to further assembly stations.

The unit, referred to above, of which the power operated robot arm mechanism forms a part, may also include an arrangement of guards, whereby the unit and the guards may be supplied as an entire "module" to be applied to a moulding machine.

One embodiment of injection moulding machine according to the invention will now be described in detail, by way of example only, with reference to the accompanying drawings, in which:

-4-

Figure 1 is a schematic perspective view from the rear of an injection moulding machine, having a power operated robot arm mechanism mounted thereon for removing moulded products from the moulding machine and depositing such products at a discharge station;

Figure 2 is a schematic view from an opposite end of the moulding machine, and showing the robot arm mechanism in an intermediate position between an upper rest position and a lower product-withdrawal position within the moulding machine;

Figure 2a illustrates the area of the platten of the injection moulding machine from which product can be removed by the robot arm mechanism of the embodiment of the invention;

Figure 2b illustrates, similarly to Figure 2a, the much smaller area of the platten from which product can be removed by a known robot arm mechanism;

Figure 3 is a view, similar to Figure 2, showing the robot arm mechanism in the product-withdrawal position;

Figure 4 shows the robot arm mechanism in an upper position, with product held thereby, and prior to downward movement of the robot arm mechanism to a depositing position;

Figure 5 shows the robot arm mechanism approaching the depositing position;

Figure 6 shows the robot arm mechanism rising-up after deposition of the product;

Figure 7 shows the robot arm mechanism in an upper rest position at the end of an operating cycle;

Figure 8 is a side view of an assembly of a forearm and sliding arm of the robot arm mechanism; and

Figure 9 is a detail end view of the forearm mounted on a free end of a main arm of the robot arm mechanism.

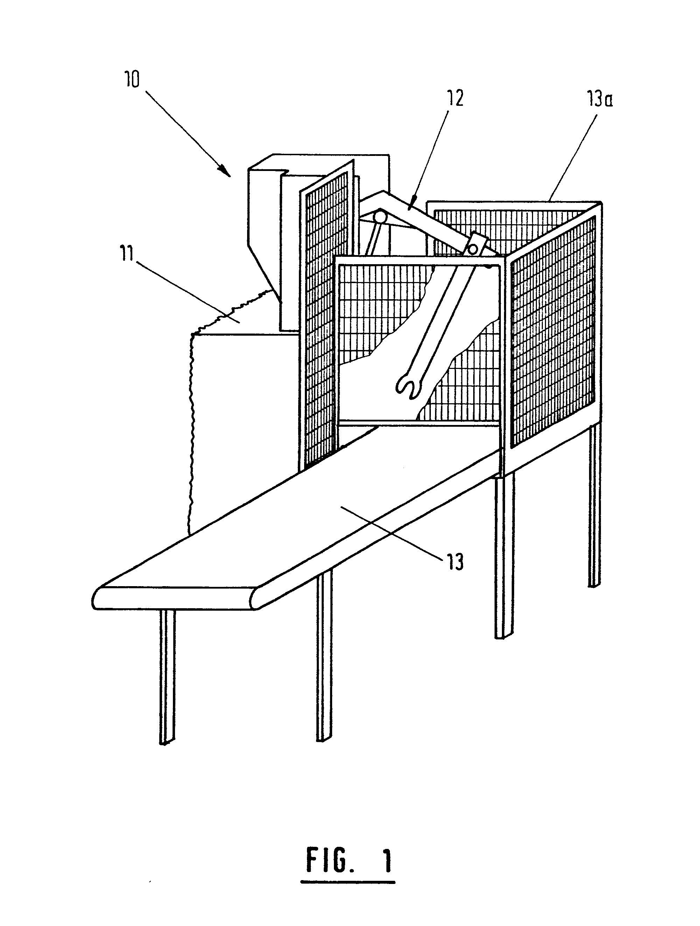

Referring now to Figure 1 of the drawings, there is shown schematically an injection moulding machine which is designated generally by reference 10, and which incorporates a platen 11 in which injection moulded products are formed. A robot arm mechanism, designated generally by reference 12, is mounted on the frame of the moulding machine 10 and is operable automatically in sequence with the operation of the moulding machine, so as to remove moulded products from the platen 11 and to deposit such products at a discharge station. In the arrangement shown in Figure 1, the discharge station is formed by an endless conveyor 13.

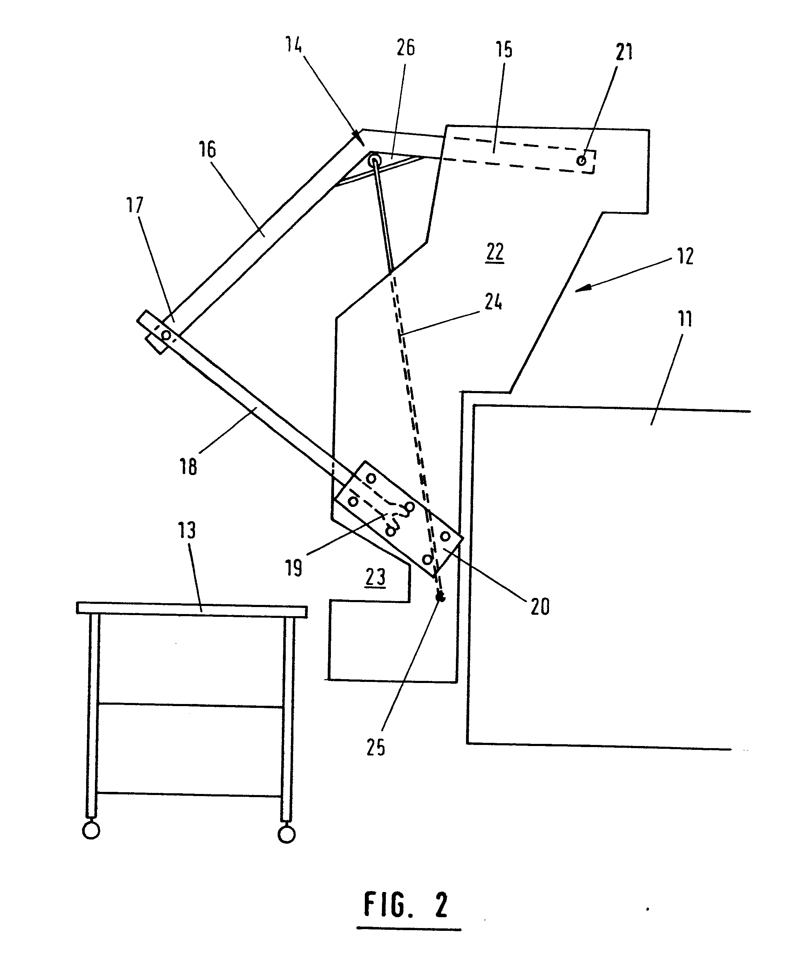

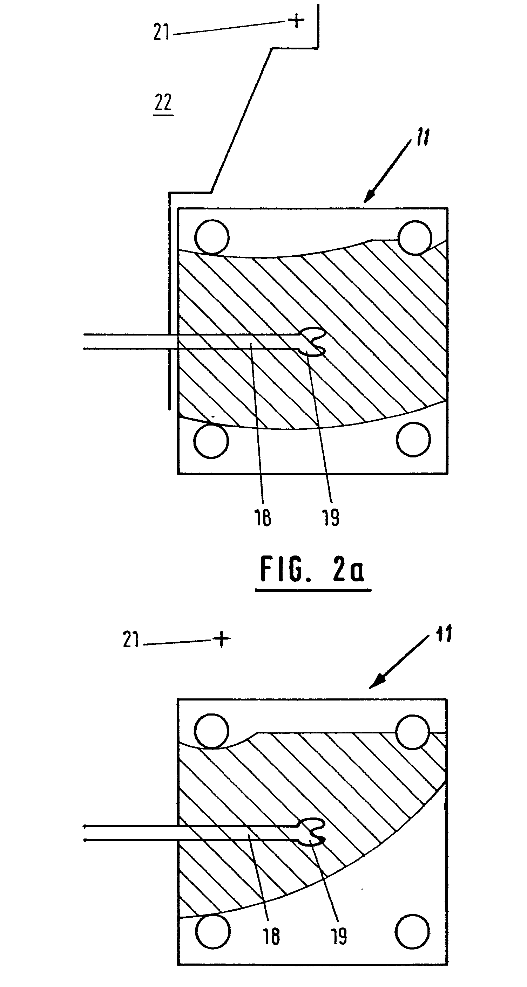

The construction and operating cycle of the robot arm mechanism 12 is shown in more detail in Figures 2 to 9 of the drawings, to which reference should be made.

The robot arm mechanism 12 is powered by pneumatic (or other fluid or liquid pressure media as desired) cylinders working from a compressed air supply and sequenced by a Programmable Logic Controller (PLC). The mechanism 12 is fully integrated with the host machine (the injection moulding machine 10), so as to be operated in sequence with the operating cycle of the host machine.

The mechanism 12 is arranged to operate at the rear of the machine 10 (rather than above as in a known overhead gantry product removal system), and is completely enclosed within a rear guard assembly 13a (see Fig. 1) which is affixed to the machine 10 so as to form a combined installation. The robot arm mechanism 12 and the guard assembly 13a form a "module" which can be installed on an existing or new construction of injection moulding machine, and has the advantage of more efficient use of space (less overhead space required compared with the known overhead gantry product removal system), and faster and more efficient operation. Nevertheless, if manual operation of the moulding machine 10 should be required for any reason, this is not prejudiced by the presence of the mechanism 12.

The robot arm mechanism 12 comprises a main arm 14 in the form of a two-part rigid elbow having a first part 15 which is pivotable about a substantially horizontal axis on a fixed pivot 21 provided on a mounting plate 22. The mounting plate 22, and the attached robot arm mechanism and associated parts form a unit which can be mounted on the side of the moulding machine 10 adjacent to the platen 11. The second part 16 of the main arm 14 has a free end 17 on which is pivotally mounted a forearm 18 which carries, at its free end, a wrist 19 and a pick-up head 20 carried thereby. The pick-up head 20 is provided with a number of suction heads which serve to engage and to remove moulded products from the platen 11, when the forearm 18 is inserted into the platen after injection moulding has been completed and a movable part of the platen has been withdrawn.

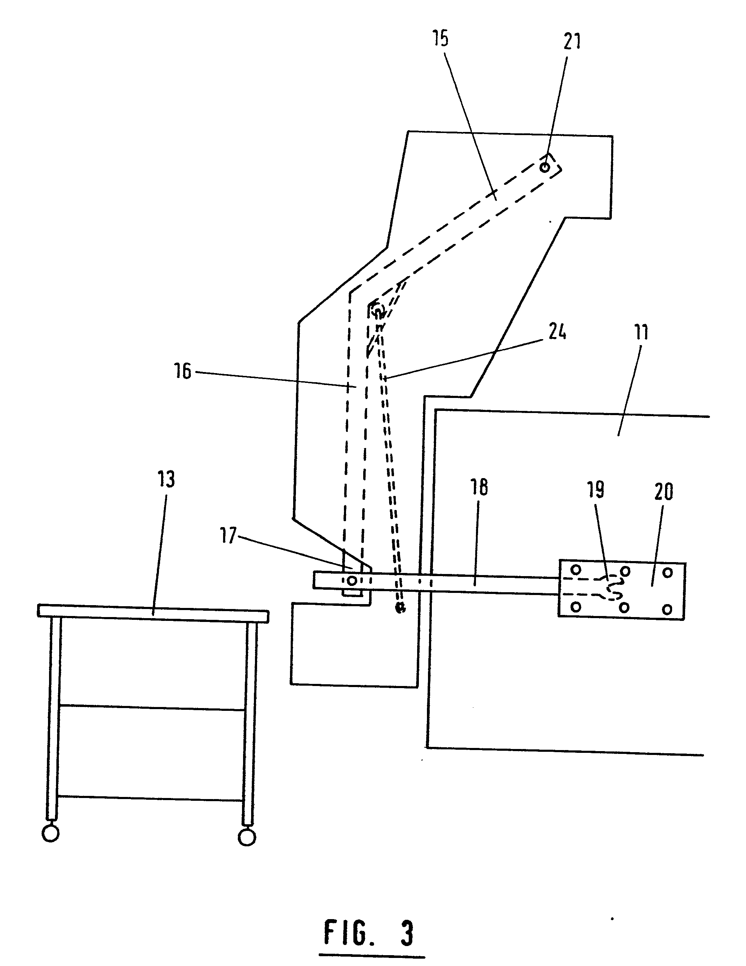

The main arm 14 is caused to carry out upward and downward pivotal movement about the pivot 21 under the action of a ram (not shown in detail) having a line of action 24 between a fixed point 25 on the mounting plate 22 and a pivot provided on a gusset plate 26 arranged at the rigid elbow of the main arm 14. The robot arm mechanism 12 is shown in Figure 2 at an intermediate position, whereas Figure 3 shows the robot arm mechanism in a lower product-withdrawal position within the platen region of the moulding machine. As will be described in more detail below, means is provided which controls the angular position of the forearm 18 relative to the main arm 14 whereby, upon operation of the robot arm mechanism, the latter is movable through a cycle of operations which includes movement of the pick-up head 20, (to enter into and to be withdrawn from the platen of the machine), in a generally horizontal direction.

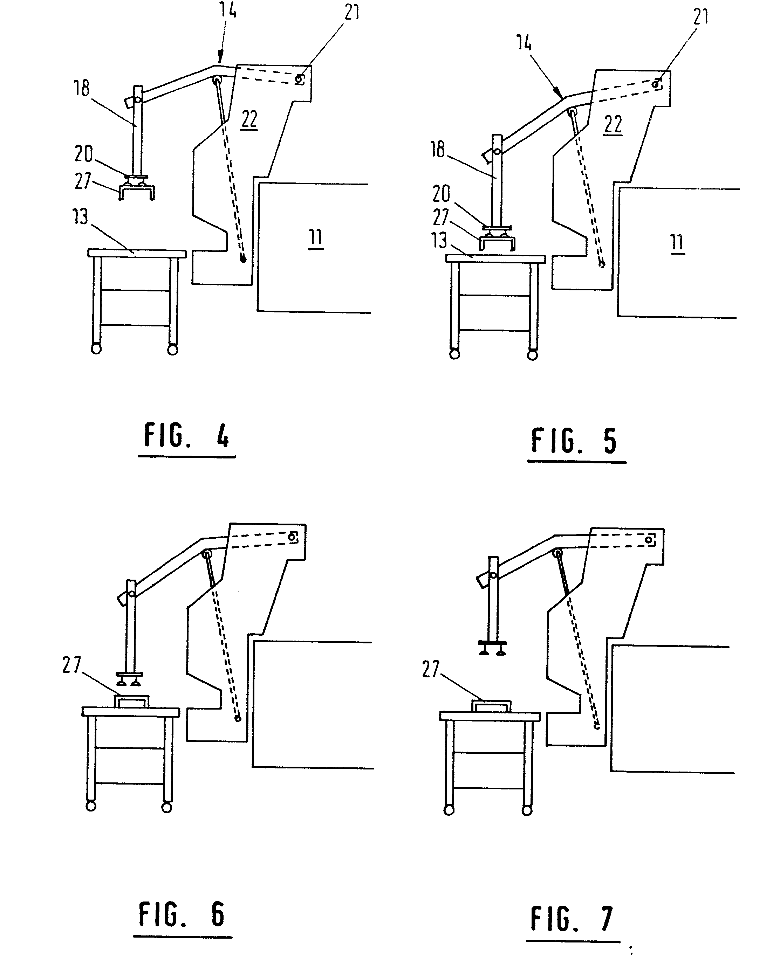

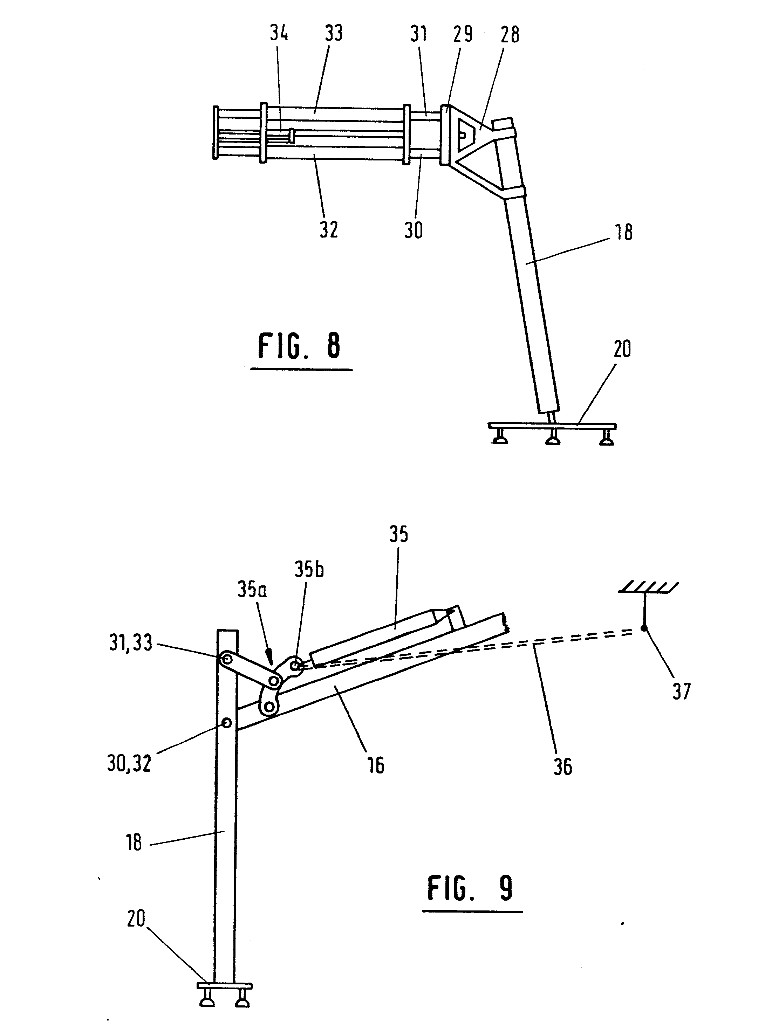

The means for controlling the angular position of the forearm 18 relative to the main arm 14 includes a ram 35 (see Figure 9) which is mounted on the second part 16 of the main arm 14 and which is coupled with the adjacent end of the forearm 18 via a toggle linkage designated generally by reference 35a. In addition, a compensating mechanism also acts on the adjacent end of the forearm 18 via the toggle mechanism 35a, the compensating mechanism comprising a sliding rod and tube arrangement 36 which acts between a fixed point 37 on the mounting plate 22 and a pivot 35b of the toggle linkage 35a to which the ram 35 is also coupled. The purpose of the compensating mechanism 36 is to act, in conjunction with the ram 35, in order to control the position of the forearm 18 as it descends to the deposition station 13 as shown in Figures 4 and 5. Thus, the pick-up head 20 descends substantially vertically relative to the table or conveyor 13 arranged adjacent to the moulding machine.

As shown particularly in more detail in Figure 8, a sliding arm arrangement is provided by which the forearm 18 is pivotally coupled with the free end 17 of the second part 16 of the main arm 14. The upper end of the forearm 18 is provided with a holding bracket 28 which is coupled with a mounting plate 29 by which the forearm is connected to lower and upper rods 30 and 31. A piston/cylinder arrangement 34 is provided by means of which the rods 30 and 31 can be moved axially relative to respective housing tubes 32 and 33. Operation of the piston/cylinder unit 34 can therefore cause the forearm 18 to be moved perpendicular to its pivotal mounting on the free end 17 of the second part 16 (see Figure 2), whereby the pick-up head 20 can be moved axially towards and away from the fixed part of the platen when the pick-up head is within the platen region and the movable part (not shown) of the platen has been withdrawn.

-8-

Therefore, the rods 30 and 31, and the housing tubes 32 and 33 form a means whereby the forearm 18 can be moved along a pivot axis perpendicular to the main arm 14. In addition, the rod 30 and housing tube 32 form the pivot axis about which the forearm 18 is pivotable relative to the second part 16 under the combined action of the ram 35 and the compensating mechanism 36. The toggle linkage 35a acts between the second part 16 and the rod 31 and housing tube 33 in order to effect the required pivoting action of the forearm 18 about the axis provided by rod 30 and housing tube 32.

As will be evident from Figures 2 and 3, the pick-up head 20 enters into, and is withdrawn from the platen region by moving in a generally horizontal direction. Figures 4 to 7 show successive stages in a cycle of operations, wherein a moulded product 27, after extraction from the platen when the forearm 18 is in the Figure 3 position, returns to the Figure 2 position, undergoes further upward pivoting movement about the pivot 21 to the Figure 4 position, descends (as shown in Figures 5 and 6) in order to deposit the moulded product, and then returns to the starting position as shown in Figure 7. There will now follow a detailed description of the sequence of operations.

When the air supply is initially introduced, without any electrical connections being present, the robot mechanism 12 will go to its default position in which the main arm 14 is fully up, the sliding arm is fully retracted, the forearm 18 is swung fully in and the wrist 19 is in the correct position for taking-out a finished product from the mould.

When the electricity is turned on, the PLC waits for a pre-programmed combination of inputs to be met. The robot will work its way sequentially through the program, checking that appropriate conditions are met and, at each stage, that certain other inputs are not received. This has the advantage of acting as a cross-check, to ensure that everything is operating satisfactorily.

The first stage in the sequence is initiated when, from its default position, the robot mechanism receives a signal to confirm that the mould is fully open, and this completes the required set of conditions for commencement of the operating cycle. The main arm 14 lowers down fully, and is held firmly against the side of the moulding machine by continuing downward pressure, with additional axial stability being provided by four nylon guide blocks (not shown in detail) between and against which the main arm firmly locates at the bottom of its travel. When the main arm 14 is fully down, the PLC orders the sliding arm to extend, a vacuum pump (not shown) to operate and apply suction to the pick-up head 20, and the mould to eject the product. All of these commands are given simultaneously.

As the suction cups on the pick-up head 20 (mounted on a mounting plate of the wrist 19) make contact with the product, a signal is received by the PLC which confirms that a vacuum is present and the sliding arm is then retracted. A further check on vacuum presence is made, and the main arm 14 is power driven whereby the robot arm mechanism 12 moves from its product removal position to its product discharge position. Thus, the main arm 14 is quickly lifted out and clear of the machine, followed by the forearm 18 pivoted thereto. When the main arm 14 is about 3/4 of the way up and clear of the platen 11, a limit switch (not shown) is operated which allows the mould to close so that the cycle of the moulding machine can be resumed, and the next product can be made.

At this point, the ram (swing cylinder) 35 coupled with the robot mechanism moves the forearm 18 outwards and the wrist 19 turns so that the moulded product held on the cups of the pick-up head 20 then faces down towards the discharge station 13 adjacent to the side of the installation. When signals are received to confirm that these operations have been completed, the main arm 14 is slowly lowered until a reed switch (not shown),which has an adjustable position on the main cylinder, confirms that the "dip" has been completed. The product is now placed at the discharge station 12 by a command which turns off the vacuum pump, thereby letting the grip from the suction cups disappear, and which simultaneously causes a small amount of air to be blown-out to assist the release of the product. The final stages of the movement of the mechanism 12 towards product discharge are shown in Figures 4 and 5.

Following product discharge, the main arm 14 then moves gradually upwards to the top of its travel. The PLC at this point checks that the mould is not open. This is to ensure that the machine has completed a cycle, before the robot attempts to remove another product. Upon receipt of this confirmation, the forearm 18 is swung back and the wrist plate holding the pick-up or gripper head 20 is turned to the take-off position, and the entire cycle is now completed. The robot mechanism is once more in its default position awaiting the first set of inputs to commence the removal routine again.

The robot mechanism includes a number of built-in safety features, one of which ensures that the main arm of the mechanism cannot descend if the mould is in any position other than fully open. If the electricity supply is disconnected at any time, the robot mechanism automatically returns to its default position. The movements of the mechanism are all switched through valves which are operated by solenoids. These are powered by a 24 volt supply, which also powers the PLC. The PLC, the valves and the solenoids are all contained in a housing which is mounted in a convenient position on the side of the robot mechanism. If the air is disconnected with the main arm 14 in the up position, a scotch bar immediately engages to prevent the main arm from lowering.

The construction and arrangement of the compensating mechanism 36 is such as to enable an adjustment to be made by means of which it can be ensured that the product held on the pick-up head 20 will always drop at a chosen position across the width of the table or conveyor 13. The mechanism 36 has the effect of keeping the wrist plate holding the pick-up head moving in substantially the same vertical plane during the "dip" and it operates by means of a rod sliding up the inside of a tube (not shown). The rod is mounted in a block, and when that block comes into contact with the end of the tube, it prevents the forearm 18 being swung out any further.

At the top of the compensating tube, there is a screw by means of which the effective length of the compensating tube can be adjusted, with the result that the position in which the product is placed on the conveyor 13 can be altered by changing the amount of swing which the swing cylinder 35 is allowed by the compensating tube to achieve during the "dip". By altering the setting of the adjustment screw it is possible to select the position in which the product is placed on the table or conveyor 13. Additionally, by arranging that on alternate cycles of the robot mechanism a sleeve is held on the compensating rod between the end of the compensating tube and the block in which the rod is mounted, thus increasing the effective length of the compensating tube, the robot mechanism can operate so as to put down products at alternate sides of the conveyor 13. By use of this feature, the robot mechanism can be caused to operate so as to place twice as many products on the conveyor 13 than would otherwise be possible, by placing such products in a stagger formation in which products are put alternately at one side then the other of the conveyor 13, provided that the product has a suitable shape.

The embodiment of industrial robot arm mechanism described herein is a fluid-operated pick and place device which can be used principally for the removal of mouldings from injection moulding machines, and has the following advantages:

1. The pivot point 21 of the main arm 14 is positioned so as to optimise the area of the platen 11 from which mouldings can be removed, as shown in Figure 2a. Thus, as can be seen from the shaded area of the platten in Figure 2a, the pick-up head 19 can remove product from a wide area of the platen, and without obstruction from any parts of the moulding machine e.g. the longitudinal tie rods (shown by four circles) of the platen halves. By contrast, Figure 2b illustrates the much smaller shaded area of platen from which product can be removed by a conventional robot arm mechanism. This conventional mechanism has a pivot 21 which is located above the left hand tie rod of the platen, and this is formed by a layshaft which is mounted above the platen. It is necessary for the layshaft to be mounted above the left hand tie rod in order to permit access from above between the platen halves in order to change the tool. If the layshaft were to be mounted above the platen in line with the pivot point 21 provided for the robot arm mechanism of the invention, this would hinder access for tool changing purposes. By contrast, the pivot point for the robot arm mechanism of the embodiment of the invention is provided by a pivot on separate mounting plate 22, and this therefore does not impede access to the platen from above for tool changing purposes.

In addition, the conventional robot arm mechanism, as shown in Figure 2b, is a rigid arm assembly, unlike the two part pivoted forearm 18 and main arm 14 of the robot arm mechanism of the embodiment of the invention. Therefore, the conventional robot arm mechanism, as shown in Figure 2b, and which is mounted on the overhead layshaft above the left hand tie rod of the platen, is a cumbersome and unwieldy mechanism, and which does not provide generally horizontal movement of the pick-up head into the platen region (because it is a rigid arm assembly mounted on a single pivot) and which can only extract product from a narrow area of the platen.

2. The main arm 14 is provided with a secondary forearm 18 which, when swung out in conjunction with turning wrist 15, brings the moulding above a table or conveyor at a useful distance to the side of the moulding machine, and at a convenient height for handling by an operator.

3. When the forearm 18 is swung out, the mouldings are lowered onto the table or conveyor by slowly dipping the main arm 14. The compensating mechanism 36 ensures that, during this dip, the moulding remains substantially on a chosen vertical line thereby not fouling the guard or the injection moulding machine.

4. The forearm assembly is demountable and can be stowed at a forearm stowage point (not shown), fettered only by a flexible connection (not shown) to the head 20, on top of the main arm which, in either the still-raised or the lowered position, then affords unimpeded access for a toolchanger to the moulding machine platen, not only when placing the moulding tool into position either from the side or, more probably, from above by means of

-14-

an overhead hoist, but also when clamping the moulding tool into place.

5. With the forearm stowed, and the main arm lowered, the back door (not shown) of the machine can be closed, and the machine is then reinstated to its unrobotised operation.

6. The robot mechanism 12 has a low head room requirement.

7. A floor wheeling guard designed to be integrated to operate in conjunction with the robot mechanism has a specially designed interfacing block for locating and connecting the guard to the robot mechanism 12 on the moulding machine, such that neither the moulding machine nor the robot mechanism can operate, neither will there be any electric or fluidic power connected, unless the guard assembly is in position (or alternatively the back door is closed, in which case only the moulding machine is enabled).

8. The axial slide motion of the robot mechanism in the sliding arm (which connects the forearm 18 to main arm 14) is of such a force that the sliding arm can be arranged to stall against the moulding and/or the tool bolster during take-off, thereby ensuring that, if the mould-open stop position of the moving platen 11 were to vary slightly during a production run, then registration would be automatically maintained.

9. At the time when the main arm 14 is in its lower position, which is when the forearm 18 enters into the moulding machine, the main arm 14 is held firmly against the frame of the robot mechanism by downward action from the main cylinder and by four guide blocks (not shown) between and against which the main arm 14 locates, thereby affording extra rigidity for the movements of the pick-up head 20 during that part of the cycle when this is most required.

0182514

-15-

10. The forearm can be turned round to face the fixed platen, and the fluid connections to the slide cylinder can be reversed, so that the robot mechanism can be made to operate on the fixed half of the moulding machine instead of the moving half.

Claims:

1.     An injection moulding machine (10) having a main frame, a platen (11) mounted in the frame, and a power operated robot arm mechanism (12) operable automatically in sequence with the operation of the moulding machine and arranged to remove moulded products (27) from the platen (11) and to deposit such products at a discharge station (13):

characterised in that the robot arm mechanism (12) comprises a main arm (14) which is pivotally mounted on the frame (22) for movement about a substantially horizontal axis (21), a forearm (18) which is pivotally mounted on a free end (17) of the main arm (14), a pivoting wrist (19) mounted on a free end of the forearm (18), a pick-up head (20) carried by the wrist (19), and means (35, 36) controlling the angular position of the forearm (18) relative to the main arm (14) whereby, upon operation of the robot arm mechanism (12), the latter is movable through a cycle of operations which includes generally horizontal movement of the pick-up head (20) to enter into and to be withdrawn from the platen (11) of the machine.

2.     An injection moulding machine according to claim 1, characterised in that said means controlling the angular position of the forearm (18) relative to the main arm (14) includes a ram (35) mounted on the main arm (14) and coupled with the forearm (18).

3.     An injection moulding machine according to claim 2, characterised in that said means also includes a compensating mechanism (36) acting between a fixed point (37) on the frame (22) and the forearm (18), said compensating mechanism serving to maintain the forearm in a substantially upright position as the pick-up head (20) is lowered to the discharge position.

4.     An injection moulding machine according to anyone of the preceding claims, characterised in that a sliding arm assembly (30 to 34) is coupled with said free end (17) of the main arm (14) and extends substantially perpendicular thereto, the forearm (18) being carried by said sliding arm assembly and being movable along the axis of the sliding arm assembly, when the pick-up head (20) is in the platen region of the moulding machine, in order to remove moulded products from the platen (11).

5. An injection moulding machine according to any one of the preceding claims, characterised in that the discharge station comprises an endless conveyor (13) extending alongside the moulding machine (10).

6. An injection moulding machine according to any one of the preceding claims, characterised in that the robot arm mechanism (12) is mounted on a mounting plate (22) and includes a guard assembly (13a) which together form a module to be applied to a moulding machine.

FIG. 1

0182514

-2/6-

**FIG. 2**

FIG. 2a

FIG. 2b

FIG. 3

FIG. 4

FIG. 5

FIG. 6

FIG. 7

FIG. 8

FIG. 9

0182514

**European Patent Office**

**EUROPEAN SEARCH REPORT**

Application number

## DOCUMENTS CONSIDERED TO BE RELEVANT

EP 85307673.5

| Category | Citation of document with indication, where appropriate, of relevant passages | Relevant to claim | CLASSIFICATION OF THE APPLICATION (Int. Cl.4) |
|---|---|---|---|
| | DE - A1  2 414 741 (DRABERT SÖHNE) | | B 25 J 11/00 |
| X | * Fig. 1-5; claims 1,2; pages 3-5 * | 1,2,4, 5 | B 25 J 18/06 |
| A | * Fig. 1 * | 6 | B 29 C 45/00 |
| | -- | | |
| | DD - A - 211 313 (PLASTVERARBEI-TUNGSWERK SCHWERIN) | | |
| Y | * Fig. 1-4; page 3, lines 10-16; page 4 * | 1,6 | |
| A | * Fig. 1; claim 2 * | 2,3 | |
| | -- | | |
| | AT - B - 326 286 (REIS) | | |
| Y | * Fig. 2; page 2, line 60 - page 3, line 4 * | 1,6 | |
| | -- | | **TECHNICAL FIELDS SEARCHED (Int. Cl.4)** |
| | DE - A - 2 147 436 (WOTAN-WERKE) | | |
| Y | * Fig. 2,3; claims; page 12 * | 1 | B 25 J 11/00 |
| A | * Fig. 2 * | 3,6 | B 25 J 18/00 |
| | ---- | | B 29 C 33/00 |
| | | | B 29 C 45/00 |
| | | | B 22 D 17/00 |
| | | | B 22 D 33/00 |

The present search report has been drawn up for all claims

| Place of search | Date of completion of the search | Examiner |
|---|---|---|
| VIENNA | 24-02-1986 | KRAL |